Europäisches Patentamt

European Patent Office

Office européen des brevets

(11) Publication number: **0 379 598**
**A1**

## EUROPEAN PATENT APPLICATION

(21) Application number: 88630231.4

(22) Date of filing: 14.12.88

(51) Int. Cl.5: **C08G 18/40, C08G 18/79, C09D 175/04, B05D 5/06, B05D 7/16**

(43) Date of publication of application:
**01.08.90 Bulletin 90/31**

(84) Designated Contracting States:
**AT BE CH DE ES FR GB IT LI NL SE**

(71) Applicant: **BASF Corporation**
**1255 Broad Street**
**Clifton New Jersey 07015(US)**

(72) Inventor: **Richards, Bradley M.**
**2208 Queensdale Court**
**Maumee Ohio 43537(US)**
Inventor: **Cameron, James Michael**
**1917 Key Street Apt. D.**
**Maumee Ohio 43537(US)**

(74) Representative: **Schmitz, Jean-Marie et al**
**OFFICE DENNEMEYER S.à.r.l. P.O. Box 1502**
**L-1015 Luxembourg(LU)**

(54) **Novel clearcoat composition.**

(57) The invention relates to the field of clearcoat coatings for use in automobile basecoat/clearcoat systems. In particular, this invention is directed to a refinish clearcoat coating composition of:

a) A polyol component consisting of a principle film forming resin or resins, with pendant hydroxyl functional groups,

b) a cellulosic ester resin, and

c) an isocyanate hardner based on a triisocyanurate ring derived from a diisocyanate selected from hexamethylene diisocyanate or isophorone diisocyanate.

EP 0 379 598 A1

## NOVEL CLEARCOAT COMPOSITION

### BACKGROUND OF THE INVENTION

Multi-layer systems have been utilized to coat automobiles for a number of years, but the development of these systems have found limited applicability in the area of refinish paint compositions. Research emphasis in the area of multi-layer systems, especially basecoat systems has also recently focused on the development of water-borne systems for multi-layer coatings.

It would be desirable to develop a refinish clearcoat paint composition for use in auto refinish applications that exhibits good ambient cure characteristics as well as providing superior adherence to a variety of solvent and water-base paint compositions that have been used to paint automobiles in the past. Paint compositions which have been used include ambient-cure coatings such as acrylic lacquers, acrylic enamels, isocyanate-hardened alkyd enamels and polyester - celulose acetate butyrate (polyester-CAB) basecoats.

Current urethane topcoat technology within the refinish industry provides coatings with excellent properties such as chemical resistance, short and long term exterior durability, high gloss and good flow. However, these systems suffer from any of a number of restrictions; in their application over a specific basecoat, application technique as necessitated by material solvent content, or in their level of toxicity. A material may often be used over only one type of substrate such as a polyester basecoat. Application solids of the topcoat may also be excessively low so that multiple coats are required to achieve sufficient film build, increasing volatile organic emissions and operating costs. Toxicity concerns may also be heightened by the presence of high levels of monomeric isocyanate. The present invention is directed to a composition that displays features which reduce or eliminate each of these shortcomings.

The present invention is, in part, directed to novel clearcoat compositions to be used in multi-layer refinish paint compositions.

It is also an object of this invention to provide resins that can be used as topcoat formulations.

It is a further object of this invention to provide a method for coating a metallic or plastic substrate utilizing the resins and basecoat clearcoat formulations of the present invention.

### SUMMARY OF THE INVENTION

The invention relates to a novel two-component clearcoat composition that can be used in auto refinish applications over a variety of basecoat compositions and substrates.

Especially preferred are clearcoat compositions that are two component and consist of a polyol component, cellulose ester resin and an isocyanate functional hardener. The components of the clearcoat composition may be combined in various amounts to provide a curable composition. A curable coating is one which forms a cross-linked film that achieves certain acceptable physical and appearance requirements for an intended application.

As indicated, the higher solids, reduced toxicity, two component, reduced temperature cure urethane coating contains a polyol component, a cellulosic ester resin, and an isocyanate hardener. More particularly, the invention comprises a coating composition of:

a) a polyol component consisting of a principle film forming resin or resins, with pendant hydroxyl functional groups,

b) a cellulosic ester resin, and

c) an isocyanate hardener based on a triisocyanurate ring derived from a diisocyanate selected from hexamethylene diisocyanate or isophorone diisocyanate.

The principle film forming resin or resins used in the present invention may be any type of resin containing pendant hydroxyl groups. Suitable resin types include acrylics (conventional or oligomeric), alkyd/polyester, polycarbonate, polyurethane, epoxy, and reactive diluents, or any combination thereof which will meet coating requirements.

The clearcoats of the invention are of particular value for coating over base-coat compositions containing metallic flake or mica pigmentation which are intended for the production of "glamour metallic" finishes chiefly upon the surfaces of automobile bodies.

### DETAILED DESCRIPTION OF THE INVENTION

The invention relates to a higher solids, reduced toxicity, two component, reduced temperature cure urethane coating which contains a polyol component, a cellulosic ester resin, and an isocyanate hardener. More particularly, the invention comprises a coating composition of:

a) A polyol component consisting of a principle film forming resin or resins, with pendant hydroxyl functional groups,

b) a cellulosic ester resin, and

c) an isocyanate hardener based on a triisocyanurate ring derived from a diisocyanate selected from hexamethylene diisocyanate or isophorone diisocyanate.

The principle film forming resin or resins used in the present invention may be any type of resin containing pendant hydroxyl groups. Suitable resin types include acrylics (conventional or oligomeric), alkyd/polyester, polycarbonate, polyurethane, epoxy, and reactive diluents, or any combination thereof which will meet coating requirements.

The term acrylic refers in the present invention to the resins typically prepared by the polymerization of ethylenically unsaturated monomers. Suitable ethylenically unsaturated monomers include acrylic and methacrylic acid and their alkyl esters such as methyl, ethyl, propyl, butyl, 2-ethyl hexyl, decyl, lauryl, stearyl, isobornyl, and the functional esters such as hydroxyethyl, hydroxypropyl, hydroxybutyl, acrylamide, glycidyl, ethylenically unsaturated aromatic hydrocarbons such as styrene, alpha methyl styrene, vinyl toluene, vinyl chloride, acrylonitrile, and others such as maleic acid or anhydride, fumaric acid, allyl alcohol, crotonic acid, etc.

The term alkyd/polyester refers in the present invention to those types generally used in baking, and ambient cure applications. Typically, these resins are a result of a stoichiometric blend of a polyhydric alcohol with a polybasic acid. Often, monohydric alcohols or monobasic acids may be blended into the alkyd/polyester for molecular weight control. These resins may or may not be modified with a saturated or unsaturated fatty acid. Examples of polyhydric alcohols include ethylene glycol, propylene glycol, neopentyl glycol, cyclohexyl dimethanol, diethylene glycol, dipropylene glycol, hydrogenated bisphenol A, 1,6 hexanediol, glycerol, trimethylol propane, pentaerythritol, sorbitol, etc. Examples of polybasic acids include maleic acid, fumaric acid, succinic acid, glutaric acid, adipic acid, phthalic acid, isophthalic acid, tetrahydrophthalic acid, itaconic acid, trimellitic acid, and the anhydrides of the above where they exist. Examples of fatty acids include those derived from the oils of linseed, soya, castor, coconut, tall, safflower, etc. or optionally oils that may be broken with a polyol.

The term polycarbonate refers in the present invention to any linear polyester of carbonic acid.

The term polyurethane refers in the present invention to those types generally used in baking and ambient cure applications. Typically, these resins are a result of a stoichiometric blend of polyhydric alcohol with a polyisocyanate. Often monohydric alcohols or monoisocyanates may be blended to control the molecular weight. Examples of polyhydric alcohols include those previously listed. Examples of polyisocyanates include toluene diisocyanate, diphenylmethane diisocyanate, hexamethylene diisocyanate, isophorone diisocyanate, dicyclohexyl methane diisocyanate, biurets of and isocyanurates of the aforementioned where they exist, etc.

The term epoxy refers in the present invention to those resins constructed through an oxirane functional group reacted with a phenolic or carboxylic acid group. Typically, these resins are a result of stoichiometric blend of bisphenol A and epichlorhydrin or derivatives thereof. This also includes novolac resins, aliphatic resins with oxirane functionality, and glycidyl ethers.

The term reactive diluent refers to a material which acts as a viscosity reducer and/or solvent and upon cure becomes a permanent portion of the coating.

The term cellulosic ester refers in the present invention to resins typical, but not exclusively, prepared by reacting cellulose and acetic, propanoic, and/or butyric acid, or a sulfuric/nitric acid mixture to form a resin. Also included in the definition may be any hydroxy cellulose resin such as hydroxy ethyl cellulose.

The term triisocyanurate in the present invention refers to the ring structure formed from the homotrimerization of hexamethylene diisocyanate or isophorone diisocyanate, or other suitable diisocyanates. The trimers may be used alone in the present coating or may be used in combination with one another.

The term reduced temperature in the present invention refers to temperatures at or below 165 degrees Fahrenheit and preferably ambient temperatures.

The coating composition of the present invention may also have incorporated therein additives such as catalysts, ultra-violet acids, anti-oxidants, rheology modifiers, plasticizer, flow and wetting agents, etc.

In order to achieve cure at lower temperatures a catalyst is ncesssary. A metal/organic acid saltor amine or combination and variations thereof can be used. Metal salts are preferred. Examples of typical catalysts are tin octoate, dibutyl tin dilaurate, and triethanol amine.

The non-volatile level is maintained over forty percent by selecting the appropriate blend of polyol component, cellulose ester resin, solvent, and isocyanate hardener.

The isocyanate/hydroxyl ratio can range from 4.5 to 0.75 with the preferred ratio being 1.10. The level of isocyanate is dictated by the NCO/OH ratio chosen by the formulator and the number of hydroxyl functional groups present from the polyol component.

The cellulose ester is formulated in the present invention in the range of 5-20% of the vehicle solids of the total composition. The preferred ester is low viscosity cellulose acetate butyrate.

The coating composition may be applied by air atomization (siphon or gravity feed) to a variety of substrates including acrylic lacquers, acrylic enamels, isocyanate hardened enamels, or polyester, polyester/CAB, or modified polyester basecoats, adhesion sealers, or scuffed O.E.M.

The following examples illustrate the present invention. Parts and percentages are by weight unless otherwise indicated.

## EXAMPLE #1

| Part A | Weight |
|---|---|
| 30% CAB in butyl acetate | 31.64 |
| Union Carbide Tone 301 | 11.68 |
| Acrylic-OH eq N.V. = 440, Tg = 75C | 21.24 |
| Butyl Acetate | 13.27 |
| Hexyl Acetage | 5.75 |
| Octyl Acetate | 2.00 |
| 1% DBTDL in xylene | 0.91 |
| Zinc Octoate | 0.23 |
| Byk 344 | 0.33 |
| 0.5% G.E. SF69 in toluene | 1.17 |
| Ciba-Geigy Tinuvin 292 | 1.23 |
| Ciba-Geigy Tinuvin 328 | 1.23 |
| Ciba-Geigy Irganox 1010 | 0.11 |
| n-Propyl Acetate | 1.69 |
| Glacial Acetic Acid | 0.59 |
| Methyl Ethyl Ketone | 6.92 |
| | 100.0 |

| Part B | Weight |
|---|---|
| Huls Isocyanurate T-1890 | 26.65 |
| Huls Tolonate HDT-90 | 16.74 |
| Butyl Acetate | 5.13 |
| Hexyl Acetate | 5.39 |
| | 53.91 |

100 parts A were mixed with 53.9 parts B to yield a 45.0% N.V. (theoretical) solution of F#4 viscosity of 20″ (at 75F) with ALPHA color of 80 and a pot life of one hour. The NCO/OH was 1.14. The solution was sprayed over acrylic lacquer, acrylic enamel, and polyester/CAB basecoat. Overnight physical resistance properties such as gasoline, water spot, and print resistance were excellent. Overnight 20 degree gloss and D.O.I. were 80-85 and 60-65, respectively. Adhesion to all substrates was excellent in humidity testing. The example coating also exhibits excellent exterior durability.

Example 2

| Part A | Weight |
|---|---|
| Johnson's Wax Joncryl-500 | 25.32 |
| 33% CAB in 1:1 butyl acetate/xylene | 22.12 |
| 1% DBTDL in xylene | 0.79 |
| Zinc Octoate | 0.20 |
| Ciba-Geigy Tinuvin 328 | 1.07 |
| Ciba-Geigy Tinuvin 292 | 1.07 |
| 0.5% G.E. SF69 in toluene | 1.13 |
| Dow Corning Additive #57 | 0.09 |
| 10% Glacial Acetic Acid in butyl acetate | 5.09 |
| Methyl Isobutyl Ketone | 22.54 |
| | 79.43 |

| Part B | Weight |
|---|---|
| Huls Isocyanurate T-1890 | 9.41 |
| Huls Tolonate HDT-90 | 5.32 |
| Isobutyl Acetate | 3.61 |
| Butyl Acetate | 2.23 |
| | 20.57 |

79.4 parts A were mixed together with 20.6 parts B to produce a 41.2% N.V. solution with F#4 viscosity of 13.5". This solution was applied over an acrylic enamel basecoat and displayed good overnight physical resistance properties as mentioned previously. The coating had a 20 degree gloss of 90 and excellent durability properties.

Example 3

The following were mixed together by weight with agitation.

| Part A | Weight |
|---|---|
| Polyester (80% N.V. based on 2-ethyl hexoic acid, trimethylol propane, and phthalic anhydride | 31.54 |
| 1% DBTDL in xylene | 0.98 |
| Zinc Octoate | 0.25 |
| Ciba-Geigy Tinuvin 328 | 1.33 |
| Ciba-Geigy Tinuvin 292 | 1.33 |
| 0.5% G.E. SF69 in toluene | 1.41 |
| Dow Corning Additive #57 | 0.11 |
| 10% Glacial Acetic Acid in butyl acetate | 6.34 |
| 33% CAB in 1:1 butyl acetate/propylene glycol monomethyl ether acetate (PMA) | 24.18 |
| PMA | 32.51 |
| | 99.98 |

| Part B | Weight |
|---|---|
| Huls Isocyanurate T-1890 | 16.74 |
| Huls Tolonate HDT-90 | 9.47 |
| Butyl Acetate | 6.43 |
| Isobutyl Acetate | 3.99 |
| | 36.63 |

100 parts A were mixed with 36.6 parts B to yield a 41.2% solution (F#4 vis 14.4") which was spray applied over an acrylic enamel basecoat. The resulting film exhibited good resistance properties and good adhesion to the basecoat. Gloss and D.O.I. were 90 and 70, respectively.

Example #4

The following were mixed together by weight and sprayed over acrylic lacquer and cured at both room temperature and 50F.

| | Weight |
|---|---|
| Part A, Ex. #1 | 200.0 |
| Huls Tolonate HDT-90 | 69.1 |
| Butyl Acetate | 14.0 |
| Hexyl Acetate | 14.3 |
| | 297.4 |

The 45.0 N.V. solution possessed a F#4 vis of 15.1" at 72F. The overnight physical resistance properties as well as the appearance of the coating were good to excellent.

Example #5

Parts A and B from Example #1 were mixed in the following ratios to illustrate various NCO/OH ratios.

| By weight | A | B | C |
|---|---|---|---|
| ExX1,A | 200 | 200 | 200 |
| Ex#1,B | 54.1 | 81.1 | 216 |
| NCO/OH | 0.57 | 0.86 | 2.28 |

Overnight physical resistance properties for solutions B and C were good. Solution a demonstrated very weak water resistance and marginal print resistance.

## Claims

1. A coating composition comprising:
   a) a polyol component,
   b) a cellulosic ester resin and
   c) an isocyanate hardener based on a triisocyanaurate ring derived from a diisocyanate selected from the group consisting of heramethylene diisocyanate and isophorone diisocyanate.
2. The coating composition of claim 1 wherein the polyol component is selected from the group consisting of hydroxy containing acrylic, alkyd, polycarbonate, polyurethane and epoxy resins.

3. The coating composition of claim 1 wherein the cellulosic ester resin comprises the reaction product of cellulose with an acid selected from acetic, propanaic, butyric and a sulfuric-nitric mixture.

4. A coating composition comprising:

a) a resin selected from the group consisting of hydroxyl containing acrylic, alkyd, polycarbonate, polyurethane and epoxy resin.

b) a cellulosic resn which comprises the reaction product of cellulose with an acid selected from acetic, propanaic, butyric and a surfuric nitric mixture and

c) an isocyanate hardener based on a triisocyanurate ring derived from a diisocyanate selected from the group consisting of heramethylene diisocyanate and isophorone diisocyanate.

5. In an automotive multi-layer paint system of basecoat - clearcoat, the improvement comprising a clearcoat composition comprising:

a) a polyol component,

b) a cellulosic ester resin and,

c) an isocyanate hardener based on a triisocyanurate ring derived from a diisocyanate selected from the group consisting of heramethylene diisocyanate and isophorone diisocyanate.

6. In an automotive multi-layer paint system of basecoat - clearcoat, the improvement comprising a clearcoat composition comprising:

a) a resin selected from the group consisting of hydroxyl containing acrylic, alkyd, polycarbonate, polyurethane and epoxy resin.

b) a cellulosic resin which comprises the reaction product of cellulose with an acid selected from acetic, propanaic, butyric and a surfuric nitric mixture and

c) an isocyanate hardener based on a triisocyanurate ring derived from a diisocyanate selected from the group consisting of heramethylene diisocyanate and isophorone diisocyanate.

# EUROPEAN SEARCH REPORT

European Patent Office

Application Number

EP 88 63 0231

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 219 131 (DAINIPPON INK)<br>* Claim 1; page 1, lines 1-15; page 3, lines 21-35; page 9, lines 25-32; page 10, lines 9-24 *<br>--- | 1-6 | C 08 G 18/40<br>C 08 G 18/79<br>C 09 D 3/72<br>B 05 D 5/06<br>B 05 D 7/16 |
| X | US-A-4 503 175 (E.C. HOUZE et al.)<br>* Claims 1,9,18,19; column 3, lines 14-26; column 5, lines 17-28 *<br>--- | 1-6 | |
| X | EP-A-0 269 035 (HERBERTS GmbH)<br>* Claims 1,6; page 4, lines 20-28; page 5, lines 5-16 *<br>--- | 1-6 | |
| X | US-A-4 442 256 (L.I. MILLER)<br>* Claims 1,7; column 4, lines 4-27 *<br>--- | 1-6 | |
| X | EP-A-0 230 003 (HERCULES INC.)<br>* Claims 1-5; page 3, lines 6-17 *<br>--- | 1-4 | |
| X | GB-A-2 109 385 (NIPPON PAINT CO.)<br>* Claims 1,2,5-8; page 1, lines 73-89; page 1, line 130 - page 2, line 2; page 2, lines 25-39 *<br>--- | 1-4 | TECHNICAL FIELDS SEARCHED (Int. Cl.5) |
| A | FR-A-1 564 327 (BAYER)<br>* Abstract; page 3, line 31 - page 4, line 25 *<br>----- | 1 | C 08 G<br>C 09 D<br>B 05 D |

The present search report has been drawn up for all claims

| Place of search | Date of completion of the search | Examiner |
|---|---|---|
| THE HAGUE | 24-07-1989 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)